# EUROPÄISCHE PATENTSCHRIFT

(11) **EP 3 027 992 B1**
(45) Veröffentlichungstag und Bekanntmachung des Hinweises auf die Patenterteilung: **18.11.2020**
(21) Anmeldenummer: 14720891.2
(22) Anmeldetag: 04.04.2014
(51) Int. Cl.: F28D 1/06, F28F 9/02, B01L 7/00, B01L 7/04, F16L 53/00, F25B 21/04, F25D 31/00, F16L 53/38

(54) **TEMPERIERVORRICHTUNG; VERWENDUNG UND ANORDNUNG**
TEMPERATURE CONTROL DEVICE, USE AND ARRANGEMENT
DISPOSITIF D'ÉQUILIBRAGE DE TEMPÉRATURE ; UTILISATION ET ENSEMBLE

(30) Priorität: 31.07.2013 DE 102013012759
(43) Veröffentlichungstag der Anmeldung: 08.06.2016
(73) Patentinhaber: Sartorius Stedim Biotech GmbH, 37079 Göttingen (DE)
(72) Erfinder: RIED, Reinhold, 34212 Melsungen (DE); GAO, Wei, 34134 Kassel (DE); KOCH, Johannes, 36179 Bebra (DE)
(74) Vertreter: Balsters, Robert
(86) Internationale Anmeldenummer: PCT/EP2014/000906
(87) Internationale Veröffentlichungsnummer: WO 2015/014417

(56) Entgegenhaltungen:
- GB-A- 1 595 916
- US-A- 4 132 262
- US-A- 5 363 907
- US-A- 5 714 738
- US-A1- 2006 016 579
- US-A1- 2009 294 095

## Beschreibung

Die Erfindung betrifft eine Temperiervorrichtung zum Temperieren eines Behälters, eine Verwendung der Temperiervorrichtung sowie eine Anordnung umfassend die Temperiervorrichtung.

Unter einem Behälter im Sinne der Anmeldung wird ein zumindest bereichsweise mittels einer Wandung eingeschlossenes Volumen verstanden, wobei die Wandung derart ausgelegt ist, daß ein Fluid mittels der Wandung in dem Behälter gehalten wird. Mit anderen Worten ist die Wandung des Behälters fluiddicht. Unter einem Fluid im Sinne der Anmeldung wird sowohl eine Flüssigkeit, ein Gas und ein Gemisch davon verstanden. Der Behälter als solches kann zumindest eine Öffnung aufweisen, durch welche das Fluid aus dem Behälter heraus oder in den Behälter hinein gelangen kann. Mit anderen Worten muß der Behälter als solches nicht fluiddicht ausgebildet sein. Vielmehr ist der Behälter aufgrund der Ausgestaltung seiner Wandung zumindest bereichsweise fluiddicht, so daß das Fluid im Inneren des Behälters gehalten werden kann.

Unter einer Temperiervorrichtung im Sinne der Anmeldung wird eine Vorrichtung verstanden, mit welcher der Behälter, insbesondere das in dem Behälter befindliche Fluid, auf eine vorbestimmte Temperatur gebracht bzw. gehalten werden kann. Mit anderen Worten dient die Temperiervorrichtung dem Temperieren des Behälters bzw. des in dem Behälter befindlichen Fluids. Dabei kann das Temperieren sowohl ein Aufheizen als auch ein Abkühlen umfassen. Insbesondere kann das Temperieren ein Aufheizen des Fluids in dem Behälter auf eine Temperatur, die höher ist als die Umgebungstemperatur des Behälters, umfassen. Entsprechend kann das Temperieren auch ein Abkühlen des in dem Behälter befindlichen Fluids auf eine Temperatur, die niedriger ist als die Umgebungstemperatur des Behälters, umfassen.

Insbesondere bei chemischen, biologischen und/oder medizinischen Anwendungen bzw. Reaktionen ist es notwendig, ein Fluid, beispielsweise eine Nährlösung, in einem Behälter, beispielsweise einem Bioreaktor, auf eine vorbestimmte Temperatur zu bringen und dort zu halten. Je nach der Umgebungstemperatur ist es dazu notwendig, den Behälter zu heizen oder zu kühlen. Dazu können beispielsweise Heiz- bzw. Kühlelemente eingesetzt werden, die in das Innere des Behälters ragen, und mit dem in dem Behälter befindlichen Fluid in Kontakt stehen. Für den Fall, daß es sich bei dem Behälter um einen sterilen Behälter handelt, findet die Temperierung des im Behälter befindlichen Fluids zweckmäßigerweise über die Wandung des Behälters statt.

US 2006/016579 A1 offenbart eine Abdeckanordnung, welche eine flexible Gewebeabdeckung umfasst, innerhalb dessen eine Vielzahl von länglichen, hohlen Wärmetransfer-Fluidprofilen positioniert ist. Jede der Profile umfasst eine bogenförmige Außenfläche, welche dazu ausgelegt ist, mit einer Außenseite einer Fluidleitung zu passen. Die Abdeckungsbaugruppe kann in Umfangsrichtung um eine Fluidleitung befestigt werden, um die Profile in thermischem Kontakt damit zu positionieren und zu halten.

US 5 363 907 A offenbart eine Schlauchleitung, die dazu ausgelegt ist, viskoses Material auf eine Abgabedüse mit einer gesteuerten Viskosität und Temperatur abzugeben. Die Schlauchanordnung umfasst einen doppelwandigen Schlauch mit einem äußeren Schlauch, der um einen inneren Schlauch angeordnet ist.

US 2009/294095 A1 offenbart ein Wärmeübertragungssystem mit einem Oberflächenelement umfassend eine erste Oberfläche und eine zweite Oberfläche, welche eine Wärmeübertragungsoberfläche ausbilden, und eine thermische Leitung die angebracht an und beabstandet zu einer ersten Oberfläche ist. GB 1595916 A offenbart eine Heiz- und Kühlmanschette für eine Rohrleitung, in der die Heiz-und Kühlelemente parallel zueinander verlaufen.

Es ist daher eine Aufgabe der Erfindung, eine Temperiervorrichtung bereitzustellen, mit welcher ein Behälter in einfacher und zuverlässiger Weise auf eine vorbestimmte Temperatur temperiert werden kann.

Diese Aufgabe wird durch eine Temperiervorrichtung mit den Merkmalen des Anspruchs 1, durch eine Anordnung mit den Merkmalen des Anspruchs 7 und durch eine Verwendung mit den Merkmalen des Anspruchs 12 gelöst. Bevorzugte Ausführungsformen sind Gegenstand der abhängigen Ansprüche.

### Temperiervorrichtung gemäß einem Aspekt

Ein Aspekt der Erfindung betrifft eine Temperiervorrichtung zum Temperieren eines Behälters umfassend:
- zumindest einen Heizbereich mit zumindest einem Heizelement, und
- zumindest einen Kühlbereich mit zumindest einem Kühlelement,
wobei die Temperiervorrichtung zumindest bereichsweise flexibel ausgebildet ist, wobei die Temperiervorrichtung durch eine flexible Verformung von einer Offenposition in eine Anordnungsposition überführbar ist und wobei die
Temperiervorrichtung in der Anordnungsposition zumindest bereichsweise formschlüssig an einer Wandung des Behälters anordenbar und derart thermisch kontaktierbar ist, daß der Behälter mittels des zumindest einen Heizelements und des zumindest einen Kühlelements temperierbar ist.

Ein thermischer Kontakt im Sinne der Anmeldung bedeutet, daß ein Wärmefluß, also ein Transport von Wärmeenergie, zwischen dem Behälter und dem Heizbereich bzw. dem Kühlbereich stattfinden kann. Vorteilhafterweise kann der Behälter, welcher in der Anordnungsposition thermisch mit der Temperiervorrichtung kontaktiert, sowohl über den Heizbereich beheizt werden als auch über den Kühlbereich gekühlt werden. Dadurch kann das Innere des Behälters bzw. das in dem Behälter befindliche Fluid auf eine vorbestimmte Temperatur gebracht bzw. gehalten werden, welche unterhalb oder oberhalb der Umgebungstemperatur des Behälters liegt. Mit anderen Worten kann der Behälter auf eine konstante vorbestimmte Soll-Temperatur gehalten werden. Dabei kann die Abweichung der Ist-Temperatur von der Soll-Temperatur kleiner als etwa 5 Grad Celsius, bevorzugt kleiner als etwa 2 Grad Celsius und insbesondere kleiner als etwa 1 Grad Celsius oder kleiner als etwa 0,5 Grad Celsius gehalten werden. Somit können vorteilhafterweise, insbesondere biochemische, Reaktionen innerhalb des Behälters unter kontrollierten Temperaturbedingungen ablaufen, bevorzugt bei einer Temperatur von etwa 37 Grad Celsius.

Der zumindest eine Heizbereich weist zumindest ein Heizelement auf. Es versteht sich, daß einer der Heizbereiche auch zwei, drei, vier, fünf, sechs, sieben, acht, neun, zehn oder mehr Heizelemente aufweisen kann. Eine Vielzahl von Heizelementen kann einen geschlossenen Heizbereich ausbilden oder alternativ eine Mehrzahl von voneinander getrennten Heizbereichen ausbilden. Demnach kann die Temperiervorrichtung genau einen Heizbereich oder eine Vielzahl von Heizbereichen aufweisen.

Entsprechend weist die Temperiervorrichtung zumindest einen Kühlbereich mit zumindest einem Kühlelement auf. Es versteht sich jedoch, daß auch zwei, drei, vier, fünf, sechs, sieben, acht, neun, zehn oder mehr Kühlelemente vorgesehen sein können. Dabei kann eine Vielzahl von Kühlelementen in einem einzelnen Kühlbereich angeordnet sein oder mehrere voneinander beabstandete Kühlbereiche ausbilden. Demnach kann die Temperiervorrichtung genau einen Kühlbereich oder eine Vielzahl von Kühlbereichen aufweisen. Dabei kann jeder der Kühlbereiche insbesondere verschieden von den Heizbereichen sein.

Die Temperiervorrichtung ist zumindest bereichsweise, insbesondere vollständig, flexibel ausgebildet. Insbesondere ist die Temperiervorrichtung in den Bereichen flexibel ausgebildet, welche ausgelegt sind, mit dem Behälter thermisch zu kontaktieren. Durch eine Verformung der flexiblen Temperiervorrichtung, kann die Temperiervorrichtung von der Offenposition in die Anordnungsposition überführt werden. Beispielsweise kann die Temperiervorrichtung in der Anordnungsposition im wesentlichen flach bzw. eben ausgebildet sein, wobei die Temperiervorrichtung beim Übergang von der Offenposition in der Anordnungsposition mit einem Behälter mechanisch kontaktiert, beispielsweise einem Gefäß mit einer runden Wandung, wobei sich die Temperiervorrichtung biegt bzw. krümmt und sich in der Anordnungsposition zumindest bereichsweise an die Wandung des Behälters schmiegt. Mit anderen Worten kann die Temperiervorrichtung aufgrund ihrer Flexibilität derart verformt bzw. gebogen werden, daß die Temperiervorrichtung in der Anordnungsposition die Wandung des Behälters, insbesondere mit dem Heizbereich und dem Kühlbereich, zumindest bereichsweise flächig kontaktiert. Dabei ist die Temperiervorrichtung in der Anordnungsposition zumindest bereichsweise in Formschluß mit der Wandung des Behälters. Dies bedeutet, daß zumindest etwa 50 Prozent, bevorzugt mehr als etwa 80 Prozent, der Fläche des Heizbereichs und des Kühlbereichs der Temperiervorrichtung mit dem Behälter kontaktiert bzw. in Formschluß steht.

Bevorzugt können der Heizbereich und der Kühlbereich der Temperiervorrichtung spaltfrei an der Wandung des Behälters angeordnet sein, wodurch ein thermischer Kontakt zwischen der Temperiervorrichtung und dem Behälter ausgebildet wird, während andere Bereiche der Temperiervorrichtung nicht mit dem Behälter kontaktieren müssen.

Die Temperiervorrichtung kann auch im wesentlichen rohrförmig ausgebildet sein, so daß der Behälter in das Innere der rohrförmig ausgebildeten Temperiervorrichtung einführbar ist. Mit anderen Worten kann die Temperiervorrichtung eine Behälteraufnahme aufweisen, in welche der Behälter entlang einer Einführrichtung zumindest bereichsweise einführbar ist. Die Behälteraufnahme der Temperiervorrichtung kann in der Offenposition einen größeren Innendurchmesser aufweisen als in der Anordnungsposition, so daß der Behälter in der Offenposition im wesentlichen kraftfrei bzw. kontaktfrei in die Behälteraufnahme der Temperiervorrichtung einführbar ist. Durch den Übergang der Temperiervorrichtung von der Offenposition in die Anordnungsposition kann der Innendurchmesser der Behälteraufnahme derart verkleinert werden, daß die Temperiervorrichtung den Behälter im Bereich des Heizbereichs und/oder des Kühlbereichs thermisch kontaktiert. Beispielsweise kann die Temperiervorrichtung dehnbar, d.h. mit einem variablen Innendurchmesser, ausgebildet sein, so daß die Temperiervorrichtung durch ein Dehnen in die Offenposition überführt werden kann, um den Behälter in die Behälteraufnahme der Temperiervorrichtung einzuführen. Bevorzugt ist die Temperiervorrichtung rückstellfähig ausgebildet, so daß die Temperiervorrichtung selbsttätig von dem gedehnten Zustand, d.h. der Offenposition, in den ungedehnten Zustand, d.h. in die Anordnungsposition, zurückkehrt. Dadurch kann eine Andruckkraft durch die Temperiervorrichtung auf den Behälter ausgeübt werden, so daß vorteilhafterweise der thermische Kontakt zwischen der Temperiervorrichtung und dem Behälter verbessert wird.

Vorzugsweise kann die Temperiervorrichtung auch in Form einer Manschette ausgebildet sein, welche weiter bevorzugt eine seitliche Öffnung aufweist, so daß die Manschette derart aufbiegbar ist, um den Schlitz derart zu vergrößern, daß die Manschette um den Behälter legbar ist. Dabei kann die seitliche Öffnung größer sein als der Behälter, an welchem die Temperiervorrichtung angebracht werden kann. Die Öffnung kann aber auch kleiner sein, wobei der Behälter dann nicht durch die seitliche Öffnung in die Manschette zumindest bereichweise eingeführt wird, sondern durch eine andere Öffnung, wobei die seitlich Öffnung insbesondere dazu dient, den Innendurchmesser der Manschette vergrößern zu können, um den Behälter einführen zu können. Nach dem Umfassen des Behälters durch die Manschette kann die Manschette geschlossen werden, d.h. in die Anordnungsposition überführt werden, so daß die Temperiervorrichtung mit dem Kühlbereich und/oder dem Heizbereich den Behälter thermisch kontaktiert.

Die Manschette weist vorteilhafterweise eine hohe Flexibilität auf und kann bevorzugt im gebogenen Zustand Krümmungradien von etwa 2 cm bis etwa 100 cm, bevorzugt 5 cm bis etwa 50 cm, aufweisen. Beispielsweise kann die Manschette eine Rippenstruktur aufweisen, welche die Krümmung der Manschette entlang einer bevorzugten Krümmungsrichtung erleichtert bzw. verbessert. Insbesondere kann die Manschette auch um den Behälter wickelbar sein. Entsprechend kann die Manschette derart dimensioniert sein, daß die Manschette entlang eines Umfangs des Behälters vollumfänglich um den Behälter angelegt werden kann, wobei der Umfang des Behälter und somit die Länge der Manschette etwa 10 cm, etwa 20 cm, etwa 50 cm, etwa 100 cm, etwa 200 cm, etwa 300 cm oder mehr betragen kann. Entlang der senkrecht zur Umfangsrichtung stehenden Höhenrichtung kann sich die Manschette etwa 10 cm, etwa 20 cm, etwa 50 cm, etwa 100 cm, etwa 200 cm, etwa 300 cm oder mehr erstrecken. Somit sind Manschetten ausbildbar deren Länge größer ist als deren Höhe und umgekehrt.

Die Manschette kann bevorzugt zumindest bereichsweise mit einem Textil bespannt sein bzw. kann die Oberfläche der Manschette bevorzugt zumindest bereichsweise aus einem Textil ausgebildet sein. Vorteilhafterweise kann die Manschette dadurch eine griffige und/oder angenehm handhabbare Oberfläche aufweisen, welche die Handhabung der Manschette erleichtert. Insbesondere kann ein Bereich der Oberfläche der Manschette, welche zum Behälter hin orientiert ist bzw. zum Behälter zeigt bzw. ausgelegt ist mit dem Behälter thermisch zu kontaktieren, verschieden von einem Bereich der Oberfläche der Manschette, welcher dem Behälter abgewandt ist, ausgebildet sein.

Besonders bevorzugt kann die dem Behälter abgewandte Seite der Manschette von einem Benutzer gehandhabt werden. Daher kann diese Seite der Manschette aus einem griffigen Textil ausgebildet sein, welches insbesondere lösbar an der Manschette befestigt ist und beispielsweise zum Waschen von der Manschette trennbar ist. Weiter vorteilhafterweise kann die dem Behälter abgewandte Seite der Manschette gegenüber dem zumindest einen Heizelement und dem zumindest einen Kühlelement thermisch isoliert werden. Dadurch kann zum einen die Handhabbarkeit erhöht werden, da ein Benutzer die Manschette auch handhaben kann, wenn diese beheizt bzw. gekühlt wird. Zum anderen werden die thermischen Verluste auf der dem Behälter abgewandten Seite der Manschette minimiert, so daß die Energieeffizienz erhöht wird.

Die dem Behälter zugewandte Seite kann ebenfalls ein Textil oder Nicht-Textil (beispielsweise eine glatte Elastomerschicht) aufweisen. Dabei kann die dem Behälter zugewandte Seite der Manschette bzw. allgemein der Temperiervorrichtung aus einem Material ausgebildet sein, welches eine höhere Wärmeleitfähigkeit aufweist, als ein Material, aus welchem die dem Behälter abgewandte Seite der Manschette bzw. Temperiervorrichtung ausgebildet ist. Insbesondere kann die dem Behälter zugewandte Seite der Manschette aus einem Material ausgebildet sein, welches eine hohe Adhäsion gegenüber Metall, Glas und/oder Kunststoff aufweist, so daß eine enge Verbindung zwischen der Manschette und dem Behälter ermöglicht wird.

Die Temperiervorrichtung kann sich in der Offenposition auch in einem wesentlichen ebenen bzw. flächigen Zustand befinden, um zumindest bereichsweise um die Wandung des Behälters herrum gewickelt zu werden. Durch diese flexible Verformung der Temperiervorrichtung kann die Temperiervorrichtung von der Offenposition in die Anordnungsposition überführt werden, in welcher der Heizbereich und/oder der Kühlbereich den umschlossenen Behälter zumindest bereichsweise thermisch kontaktiert.

Unter einem Behälter im Sinne der Anmeldung können beispielsweise Reaktionsgefäße aus Glas, Metall, Kunststoff oder Keramik verstanden werden. Die Behälter können bevorzugt eine runde, d.h. in etwa zylindrische oder kugelförmige Gestalt, aufweisen. Diese im wesentlichen zylindrischen oder kugelförmigen Behälterformen ermöglichen es in einfacher Weise die Temperiervorrichtung im wesentlichen formschlüssig an den Behälter anzuordnen. Insbesondere können manschettenförmige oder im wesentlichen rohrförmige Temperiervorrichtungen in besonders einfacher Weise mit Behältern, die eine im wesentliche zylindrische Form aufweisen, in Formschluß gebracht werden, wodurch sich vorteilhafterweise ein guter thermischer Kontakt ergibt. Behälter, die im wesentlichen eine zylindrische bzw. kugelförmige Gestalt aufweisen, können beispielsweise Rohre, Reagenzgläser, Kolben, Bioreaktorgefäße, Kanister, Flaschen, Spritzen, Beutel, Schläuche, Anschlüsse, Abluftrohre oder ähnliches sein.

Erfindungsgemäß umfaßt die Temperiervorrichtung eine Fixiereinrichtung, mit welcher die Temperiervorrichtung in der Anordnungsposition fixierbar ist. Die Fixiereinrichtung kann bevorzugt einen Fixierbereich aufweisen, welcher in der Anordnungsposition der Temperiervorrichtung derart mit einem komplementären Fixierbereich in Eingriff bringbar ist, so daß eine Überführung der Temperiervorrichtung von der Anordnungsposition in die Offenposition gehemmt ist. Beispielsweise kann die Fixiereinrichtung als Klettverschluß ausgebildet sein, wobei der Fixierbereich durch die Schlaufen des Klettverschlusses und der komplementäre Fixierbereich durch die Haken des Klettverschlusses ausgebildet sind. Die Fixiereinrichtung kann auch als Druckknopfverschluß ausgebildet sein, wobei der Fixierbereich als der Druckknopfteil, welcher eine Vertiefung aufweist, ausgebildet ist, während der komplementäre Fixierbereich als der Druckknopfteil, welcher mit dem passenden Knopf versehen ist, ausgebildet ist. Es versteht sich, daß die Temperiervorrichtung auch eine Vielzahl von Fixiereinrichtungen aufweisen kann. Beispielsweise kann die Temperiervorrichtung zwei, drei, vier, fünf, sechs, sieben, acht, zehn oder mehr Fixiervorrichtungen aufweisen.

Erfindungsgemäß sind der Heizbereich und der Kühlbereich als voneinander räumlich getrennte geschlossene Bereiche ausgebildet. Mit anderen Worten bildet das zumindest eine Heizelement einen kompakten Heizbereich aus, während das zumindest eine Kühlelement einen kompakten Kühlbereich ausbildet. Dies bedeutet, daß der Heizbereich und der Kühlbereich durch eine einzige Grenzlinie voneinander trennbar sind. Für den Fall, daß eine Vielzahl von Heizelementen und Kühlelementen vorgesehen ist, sind diese nicht im Wechsel zueinander an der Temperiervorrichtung angeordnet bzw. nicht gleichmäßig über die Temperiervorrichtung verteilt, sondern bilden zwei getrennte Bereiche aus.

Alternativ können das zumindest eine Heizelement und das zumindest eine Kühlelement so eng nebeneinander liegen, daß der Heizbereich und der Kühlbereich an der Kontaktfläche zwischen der Temperiervorrichtung und dem Behälter räumlich zumindest bereichsweise, insbesondere vollständig, zusammenfallen. Somit ergibt sich keine räumliche Trennung zwischen dem Heizbereich und dem Kühlbereich, sondern lediglich eine zeitliche Trennung in Abhängigkeit davon, ob das Heizelement oder das Kühlelement aktiviert ist. Insbesondere können das zumindest eine Heizelement und das zumindest einen Kühlelement miteinander verschlungen angeordnet sein, um eine räumliche Trennung des Heizbereichs und des Kühlbereichs zu vermeiden.

Mit anderen Worten kann ein Aspekt der Erfindung eine Temperiervorrichtung zum Temperieren eines Behälters betreffen, welche
- zumindest ein Heizelement, und
- zumindest ein Kühlelement, umfaßt,
wobei die Temperiervorrichtung zumindest bereichsweise flexibel ausgebildet ist, wobei die Temperiervorrichtung durch eine flexible Verformung von einer Offenposition in eine Anordnungsposition überführbar ist und wobei die Temperiervorrichtung in der Anordnungsposition zumindest bereichsweise formschlüssig an einer Wandung des Behälters anordenbar und derart thermisch kontaktierbar ist, daß der Behälter mittels des zumindest einen Heizelements und des zumindest einen Kühlelements temperierbar ist.

Dabei können das zumindest eine Heizelement und das zumindest eine Kühlelement flächig ausgebildet und im wesentlichen parallel zueinander angeordnet sein. Mit anderen Worten kann die Temperiervorrichtung an einer dem Behälter zugewandten Seite das zumindest eine Heizelement aufweisen, während das zumindest eine Kühlelement an der dem Behälter abgewandten Seite des zumindest einen Heizelements angeordnet ist. Alternativ kann die Temperiervorrichtung an einer dem Behälter zugewandten Seite das zumindest eine Kühlelement aufweisen, während das zumindest eine Heizelement an der dem Behälter abgewandten Seite des zumindest einen Kühlelements angeordnet ist. Insbesondere kann genau ein Heizelement und/oder genau ein Kühlelement vorgesehen sein.

Besonders bevorzugt sind das zumindest eine Heizelement und das zumindest eine Kühlelement gleichzeitig betreibbar. Vorteilhafterweise kann dadurch ein Bereich des Behälters geheizt und ein anderer Bereich des Behälters gekühlt werden. Dadurch kann ein Temperaturgradient innerhalb des Behälters ausgebildet werden. Insbesondere bei langgestreckten Behältern, das heißt bei Behältern, die sich entlang einer Längsrichtung um einen Faktor von mehr als etwa 2, bevorzugt von mehr als etwa 5 und insbesondere von mehr als etwa 10, länger erstrecken als entlang einer Breitenrichtung, welche senkrecht zur Längsrichtung steht, wie beispielsweise Rohre oder Schläuche, kann ein Temperaturgradient innerhalb des Behälters ausgebildet werden.

Vorteilhafterweise kann ein Temperaturgradient innerhalb des Behälters genutzt werden, um eine chemische Reaktion und/oder einen biologischen Prozeß zu steuern. Beispielsweise kann ein Bereich des Behälters mittels des Heizbereichs der Temperiervorrichtung geheizt werden, um den im Behälter befindlichen Edukten bzw. Ausgangsstoffen eine Aktivierungsenergie zuzuführen, wodurch eine chemische Reaktion bzw. ein biologischer Prozeß initiiert wird. Dabei können die Edukte, beispielsweise in einer wässrigen Lösung, durch den Behälter, beispielsweise ein Rohr, zu einem Bereich verlagert werden, der mittels des zumindest einen Kühlelements gekühlt wird. Dadurch kann beispielsweise eine bei der stattfindenden chemischen Reaktion anfallende Reaktionswärme abgeführt werden. Zweckmäßigerweise fließt die wässrige Lösung in diesem Fall innerhalb des Behälters von dem Heizbereich hin zum Kühlbereich.

Vorzugsweise ist das zumindest eine Heizelement elektrisch heizbar. Beispielsweise kann das zumindest eine Heizelement als Heizwiderstand ausgebildet sein, so daß ein durch das Heizelement fließender elektrischer Strom an dem Heizwiderstand in thermische Energie umgewandelt wird. Das elektrische Heizelement kann sowohl mit Gleichspannung als auch mit Wechselspannung betreibbar sein. Insbesondere kann das in dem Heizbereich angeordnete zumindest eine Heizelement ausgelegt sein eine Heizleistung von etwa 100 Watt bis etwa 400 Watt, bevorzugt etwa 150 Watt bis etwa 350 Watt, insbesondere etwa 250 Watt, bereitzustellen. Beispielsweise kann der zumindest eine Heizwiderstand mit einer Gleichspannung von etwa 12 V bis etwa 60 V, bevorzugt etwa 24 V bis etwa 50 V, insbesondere 48 V, betrieben werden, wobei der durch den zumindest einen Heizwiderstand fließende elektrische Strom eine Stromstärke von etwa 20 A bis etwa 40 A aufweisen kann. Die durch das zumindest eine Heizelement erzeugte thermische Energie kann ausreichend sein, eine Temperaturänderung des Behälters zwischen etwa 10°C pro Stunde und etwa 30°C pro Stunde, bevorzugt zwischen etwa 15°C pro Stunde und etwa 20°C pro Stunde, zu erreichen. Mit anderen Worten ist eine Temperaturdifferenz von etwa 10°C bis etwa 20°C zwischen der Ist-Temperatur des Behälters und der vorgegebenen Soll-Temperatur des Behälters in etwa einer Stunde oder weniger ausgeglichen.

Bevorzugt kann das zumindest eine Heizelement als Peltierelement ausgebildet sein, wobei der Stromfluß durch das Peltierelement derart gesteuert ist, daß die sich erwärmende Seite des Peltierelements dem Behälter bzw. der Behälteraufnahmeöffnung zugewandt ist. Vorteilhafterweise kann thermische Energie durch das Peltierelement aus der Umgebung in Richtung des Behälters geführt werden. Weiter vorteilhafterweise kann durch eine Umkehr des Stromflusses ein Heizelement zu einem Kühlelement umfunktioniert werden, da dann die aufheizende Seite des Peltierelements zur abkühlenden Seite des Peltierelements wird. In diesem Fall könnte ein Heizelement vorgesehen sein, welches auch als Kühlelement dienen kann, so daß auf ein separates Kühlelement verzichtet werden könnte. In diesem Fall würde die Temperiervorrichtung zum Temperieren des Behälters zumindest einen kombinierten Heiz- und Kühlbereich mit zumindest einem Peltierelement umfassen, wobei die Temperiervorrichtung zumindest bereichsweise flexibel ausgebildet ist, wobei die Temperiervorrichtung durch eine flexible Verformung von einer Offenposition in eine Anordnungsposition überführbar ist und wobei die Temperiervorrichtung in der Anordnungsposition zumindest bereichsweise formschlüssig an einer Wandung des Behälters anordenbar und derart thermisch kontaktierbar ist, daß der Behälter mittels des zumindest einen Peltierelements temperierbar ist. Beispielsweise könnte eine Manschette mit genau einem oder mehreren Peltierelementen vorgesehen sein.

Vorzugsweise ist das zumindest eine Kühlelement mittels eines Kühlfluids oder elektrisch kühlbar. Weiter vorzugsweise umfaßt das zumindest eine Kühlelement eine Kühlfluidleitung, welche über einen Vorlauf mit einem Kühlfluid beschickbar ist, welche durch die Kühlfluidleitung zu einem Rücklauf fließt. Die Kühlfluidleitung kann flexibel und/oder dehnbar ausgebildet sein, um sich beim Übergang der Temperiervorrichtung von der Offenposition in die Anordnungsposition und umgekehrt verformen bzw. verlagern zu können. Das Kühlfluid kann eine Flüssigkeit, ein Gas oder ein Flüssigkeit-Gas-Gemisch sein. Als bevorzugtes Kühlfluid kann Wasser, Öl oder eine sonstige Flüssigkeit dienen. Das dem Vorlauf zugeführte Kühlfluid weist zweckmäßigerweise eine geringere Temperatur auf, als der zu kühlende Behälter. Durch die dem Behälter entzogene thermische Energie wird das Kühlfluid in der Kühlfluidleitung erwärmt, wobei sich der Behälter entsprechend abkühlt. Das erwärmte Kühlfluid wird durch nachfließendes, kühles Kühlfluid, welches über den Vorlauf in die Kühlfluidleitung fließt, aus dieser verdrängt und fließt über den Rücklauf ab. Die Temperatur des Kühlfluids am Vorlauf kann beispielsweise etwa 5°C bis etwa 10°C, insbesondere etwa 8°C betragen. Bevorzugt beträgt die Kühlleistung aller in dem Kühlbereich angeordneten Kühlelemente etwa 150 Watt. Insbesondere kann die Temperiervorrichtung ausgelegt sein, eine Temperaturänderung zwischen etwa 5°C pro Stunde und etwa 10°C, bevorzugt zwischen etwa 5°C pro Stunde und etwa 20°C, pro Stunde zu erreichen. Besonders bevorzugt ist das zumindest eine Kühlelement als Peltierelement ausgebildet. Wie bereits in Zusammenhang mit dem zumindest einen Heizelement beschrieben, bewirkt ein Stromfluß durch ein Peltierelement, daß dieses sich an einer Seite erwärmt, während sich die andere Seite abkühlt. Dementsprechend kann ein Stromfluß durch ein Peltierelement derart angelegt sein, daß die sich abkühlende Seite des Peltierelements dem Behälter bzw. der Behälteraufnahme der Temperiervorrichtung zugewandt ist. Vorteilhafterweise kann durch eine Umpolung des Stromflusses bewirkt werden, daß sich ein Peltierelement von einem Kühlelement zu einem Heizelement wandelt.

Vorzugsweise umfaßt die Temperiervorrichtung zumindest eine Isolierschicht, welche an der dem Behälter abgewandten Seite der Temperiervorrichtung angeordnet ist. Es versteht sich, daß auch zwei, drei, vier oder mehr Isolierschichten vorgesehen sein können. Die zumindest eine Isolierschicht bewirkt eine thermische Isolierung des Behälters, sowie des Heizbereichs und des Kühlbereichs gegenüber der Umgebungstemperatur. Als Umgebungstemperatur wird die Raumtemperatur des Raumes bezeichnet, in welche sich der Behälter und die daran angeordnete Temperiervorrichtung befinden. Die Isolierschicht kann beispielsweise aus einem geschäumten Kunststoff, wie beispielsweise Styropor, einem mineralischen Dämmstoff, wie beispielsweise Glaswolle oder Steinwolle, oder einem sonstigen thermisch isolierenden Stoff besteht. Zweckmäßigerweise sind das zumindest eine Heizelement und/oder das zumindest eine Kühlelement zwischen der Isolierschicht und dem Behälter bzw. der Behälteraufnahme der Temperiervorrichtung angeordnet, wenn sich die Temperiervorrichtung in der Anordnungsposition befindet.

Vorzugsweise umfaßt die Temperiervorrichtung einen Temperatursensor, durch welchen die Temperatur des Behälters erfaßbar ist. Insbesondere kann der Temperatursensor an einer Wandung der Behälteraufnahme der Temperiervorrichtung angeordnet sein, um in der Anordnungsposition der Temperiervorrichtung in thermischen Kontakt mit dem Behälter zu sein. Der Temperatursensor kann mit einer Steuervorrichtung verbindbar sein, welche das zumindest eine Heizelement und/oder das zumindest eine Kühlelement steuern bzw. regeln kann. Die Steuervorrichtung kann insbesondere Bestandteil der Temperiervorrichtung sein. Alternativ kann die Steuervorrichtung auch eine externe Steuervorrichtung sein, welche mit der Temperiervorrichtung verbindbar ist. Dazu kann die Temperiervorrichtung insbesondere einen elektrischen Verbinder aufweisen, welche mit einem komplementären elektrischen Verbinder der Steuervorrichtung verbindbar ist.

### Anordnung gemäß einem Aspekt

Ein Aspekt der Erfindung betrifft einen Anordnung umfassend:
- eine erfindungsgemäße Temperiervorrichtung,
- einen Behälter, mit welchem die Temperiervorrichtung in thermischen Kontakt angeordnet ist, und
- eine Steuervorrichtung, welche das zumindest eine Heizelement und das zumindest eine Kühlelement der Temperiervorrichtung steuert.

Die Temperiervorrichtung ist in einer Anordnungsposition an dem Behälter angeordnet und thermisch kontaktiert. Der thermische Kontakt zwischen der Temperiervorrichtung und dem Behälter ermöglicht einen Wärmefluß von dem zumindest einen Heizelement zum Behälter und von dem Behälter zu dem zumindest einen Kühlelement. Die Steuervorrichtung kann Teil der Temperiervorrichtung sein oder als externe Steuervorrichtung ausgebildet sein. Die Steuervorrichtung aktiviert bzw. deaktiviert das zumindest eine Heizelement und das zumindest eine Kühlelement. Bevorzugt ist die Steuervorrichtung mit einem Temperatursensor verbunden, welcher die Ist-Temperatur des Behälters mißt. Mittels der Steuervorrichtung kann die Temperatur des Behälters auf einen vorbestimmten konstanten Wert gehalten werden. Weiter kann die Steuervorrichtung das zumindest eine Heizelement aktivieren, um die Temperatur des Behälters auf einen vorbestimmten Wert zu erhöhen. Entsprechend kann die Steuervorrichtung das zumindest eine Kühlelement aktivieren, um die Temperatur des Behälters bis auf einen vorbestimmten Temperaturwert zu erniedrigen.

Für den Fall, daß das zumindest eine Heizelement elektrisch betrieben wird, kann die Steuervorrichtung den Stromfluß durch das zumindest eine Heizelement steuern bzw. regeln, insbesondere in Abhängigkeit von einer Ist-Temperatur, welche durch den Temperatursensor ermittelt wird. Entsprechend kann die Steuervorrichtung einen Stromfluß durch das zumindest eine Kühlelement steuern bzw. regeln, falls diese zumindest eine Kühlelement elektrisch betrieben wird. Für den Fall, daß das zumindest eine Kühlelement mittels eines Kühlfluids gekühlt wird, kann die Anordnung eine Kühlfluidquelle aufweisen, welche kaltes Kühlfluid zur Verfügung stellt. Die Kühlfluidquelle kann mit einem Vorlauf des zumindest einen Kühlelements fluidisch verbunden sein, um dem zumindest einen Kühlelement kaltes Kühlfluid zuzuführen. Insbesondere kann das kalte Kühlfluid eine Temperatur von etwa 5°C bis etwa 10°C aufweisen. Das Kühlfluid fließt von dem Vorlauf des zumindest einen Kühlelements zum Rücklauf des zumindest einen Kühlelements und wird dabei durch die von dem Behälter abgegebene thermische Energie erwärmt. Das erwärmte Kühlfluid kann zu einer Kühlfluidsenke zurückgeführt werden, wo es entweder verworfen wird oder wo es abgekühlt und der Kühlfluidquelle zugeführt wird. Zwischen der Kühlfluidquelle und dem Vorlauf des zumindest einen Kühlelements kann ein Ventil angeordnet sein, welches den Zufluß von Kühlfluid zum Vorlauf beschränken kann. Das Ventil kann von der Steuervorrichtung in Abhängigkeit von der Temperatur des Behälters gesteuert bzw. geregelt werden.

Entsprechend kann das zumindest eine Heizelement mit einem Heizfluid betrieben werden. Dazu kann die Anordnung einer Heizfluidquelle aufweisen, welche ein heißes Fluid, insbesondere mit einer Temperatur von etwa 30°C bis etwa 100°C oder etwa 120°C, bereitstellt. Die Heizfluidquelle kann mit einem Vorlauf des zumindest einen Heizelements fluidisch verbunden sein. Das heiße Fluid fließt vom Vorlauf des zumindest einen Heizelements zum Rücklauf des zumindest einen Heizelements und gibt dabei thermische Energie an den Behälter ab. Vom Rücklauf kann das abgekühlte Heizfluid zu einer Heizfluidsenke fließen, um dort verworfen zu werden oder um dort wieder erwärmt zu werden und der Heizfluidquelle zugeführt zu werden. Als Kühlfluid und Heizfluid können insbesondere Wasser oder Öl verwendet werden.

Die Steuervorrichtung kann bevorzugt eine Vielzahl von Steuereinrichtungen aufweisen, wobei insbesondere jeder der Steuereinrichtungen ein oder mehrere zugeordnete Heizelemente oder ein oder mehrere zugeordnete Kühlelemente steuern bzw. regeln kann.

Vorzugsweise ist der Behälter, an welchem die Temperiervorrichtung angeordnet ist, als Rohrleitung ausgebildet. Beispielsweise kann die Rohrleitung ausgelegt sein, ein Gas, insbesondere Abluft oder Zuluft, zu leiten. Bevorzugt kann die Rohrleitung einen Durchmesser von etwa 1 cm bis etwa 50 cm, insbesondere von etwa 10 cm bis etwa 20 cm, aufweisen, um die Reibungsverluste des strömenden Gases bzw. der Luft an der Rohrwandung zu reduzieren. Um beispielsweise Stoffe aus dem in der Rohrleitung strömenden Gas zu kondensieren, kann die Temperiervorrichtung die Rohrleitung zumindest bereichsweise kühlen, insbesondere auf eine Temperatur, die unter dem Taupunkt des zu kondensierenden Stoffes aus dem Gas liegt. Um das Gas während des Strömens durch die Rohrleitung zu sterilisieren, kann die Rohrleitung zumindest bereichsweise beheizt werden, insbesondere auf eine Temperatur vom etwa 90 Grad Celsius bis etwa 120 Grad Celsius.

Vorzugsweise weist die Rohrleitung eine Anschlußkonfiguration auf, welche mit einer komplementären Anschlußkonfiguration eines weiteren Behälters lösbar fluidisch verbindbar ist. Insbesondere kann die Anschlußkonfiguration einen sterilen Verbinder aufweisen. Bevorzugt kann die Rohrleitung mittels der Anschlußkonfiguration mit einem Reaktionsgefäß bzw. einem Bioreaktorbehälter fluidisch verbunden sein, um beispielsweise das während einer chemisch Reaktion bzw. einem biologischen Prozeß entstehende Abgas abzuführen. In Abhängigkeit von der durchgeführten Reaktion ist es notwendig das Abgas zu sterilisieren oder im Abgas befindliche Stoffe durch Kondensation aus dem Abgas zu entfernen. Wie oben beschrieben kann die Rohrleitung mittels der Temperiervorrichtung gekühlt oder geheizt werden.

Mit anderen Worten kann die Erfindung auch eine Abgastemperiervorrichtung, insbesondere eine Ablufttemperiervorrichtung, betreffen, welche
- eine Abgasrohrleitung mit einer Anschlußkonfiguration, die mit einer komplementären Anschlußkonfiguration eines Behälters lösbar fluidisch verbindbar ist;
- eine erfindungsgemäße Temperiervorrichtung, welche lösbar oder unlösbar an der Abgasrohrleitung befestigt ist und mit der Abgasrohrleitung thermisch kontaktiert, um ein durch die Abgasrohrleitung strömendes Abgas, insbesondere Abluft, zu temperieren, und
- eine Steuervorrichtung, welche zumindest ein Heizelement und zumindest ein Kühlelement der Temperiervorrichtung steuert bzw. regelt, aufweist.

Insbesondere kann die Abgastemperiervorrichtung mit einem Bioreaktor verbindbar bzw. verbunden sein. Je nach dem im Bioreaktor durchgeführten Prozess, kann die Abluft gekühlt und/oder beheizt werden. Vorzugsweise kann das zumindest eine Kühlelement abgasstromaufwärts vom zumindest einen Heizelement angeordnet sein. Dadurch kann beispielsweise eine Kondensation von Stoffen aus dem Abgas bzw. der Abluft mit anschließendem Sterilisieren des Abgases erfolgen.

### Verwendung gemäß einem Aspekt

Ein Aspekt der Erfindung betrifft eine Verwendung einer erfindungsgemäßen Temperiervorrichtung zum Temperieren eines Behälters, wobei die Temperiervorrichtung in einer Offenposition an den Behälter angeordnet wird und in die Anordnungsposition überführt wird, wobei das zumindest eine Heizelement und das zumindest eine Kühlelement der Temperiervorrichtung mit dem Behälter thermisch kontaktiert und wobei das zumindest eine Heizelement aktiviert wird, um den Behälter zu erwärmen, oder das zumindest eine Kühlelement aktiviert wird, um den Behälter abzukühlen.

Vorteilhafterweise kann der Behälter durch die Verwendung der Temperiervorrichtung erwärmt, abgekühlt oder auf eine vorbestimmte konstante Temperatur gehalten werden. Es versteht sich, daß mit dem Behälter, auch dessen Inhalt erwärmt, gekühlt oder konstant temperiert werden kann. Das Heizen bzw. Kühlen des Behälters durch die Temperiervorrichtung erfolgt nachdem die Temperiervorrichtung von der Anordnungsposition in eine Betriebsposition überführt wurde, wobei in der Betriebsposition das zumindest eine Heizelement der Temperiervorrichtung mit einer Stromquelle kontaktiert ist, sofern das zumindest eine Heizelement elektrisch betreibbar ist, oder mit einer Heizfluidquelle fluidisch verbunden ist, sofern das Heizelement mittels eines Heizfluids betreibbar ist. Weiter ist in der Betriebsposition das zumindest eine Kühlelement mit einer Stromquelle verbunden, sofern das zumindest eine Kühlelement elektrisch betreibbar ist, oder mit einer Kühlfluidquelle verbunden, sofern das zumindest eine Kühlelement mittels eines Kühlfluids betreibbar ist. Weiter kann in der Betriebsposition die Temperiervorrichtung mit einer externen Steuervorrichtung verbunden sein, welche den Betrieb des zumindest einen Heizelements und des zumindest einen Kühlelements steuert bzw. regelt. Weiter kann in der Betriebsposition eine mit der Steuervorrichtung verbundender Temperatursensor den Behälter thermisch kontaktieren, um die Ist-Temperatur des Behälters zu erfassen und der Steuervorrichtung zur Verfügung zu stellen, so daß die Steuervorrichtung in Abhängigkeit von der Ist-Temperatur das zumindest eine Heizelement oder das zumindest eine Kühlelement aktivieren bzw. deaktivieren kann.

Beispielsweise kann die Temperiervorrichtung im Biotechnologiebereich, in der chemischen Industrie, in der Medizintechnik, im Nahrungs- und Genußmittelbereich und im Gaststättenbereich eingesetzt werden. Insbesondere biotechnische Reaktionen sind stark temperaturabhängig, so daß ein Änderung der Temperatur in einem Bioreaktor um ein Grad Celsius eine Änderung der Ausbeute eines zu produzierenden Produkt um mehr als 10 Prozent bewirken kann. Da als Bioreaktorbehälter insbesondere Beutel bzw. Einwegbehälter aus einem Kunststoff verwendet werden, die eine geringe Wandstärke aufweisen, ist ein schneller Wärmefluß durch die Wandung des Bioreaktorbehälters möglich, der ausgeglichen werden sollte. In der Medizintechnik sind sterile Einwegbehälter weit verbreitet, wobei diese Einwegbehälter ebenfalls kaum wärmedämmende Eigenschaften aufweisen und der Inhalt des Behälters schnell die Umgebungstemperatur annimmt. Jedoch ist diese vielfach nicht gewünscht. Im Gegenteil sollen (Zell-)Kulturen und andere medizinische Produkte möglichst konstant temperiert werden, auch und gerade bei einem Transport oder an Orten an denen kein Thermostat, Kryostat oder ähnliches vorhanden ist. Insbesondere in diesen Fällen kann die erfindungsgemäße Temperiervorrichtung eingesetzt werden. Auch im Nahrungs- und Genußmittelbereich und im Gaststättenbereich ist das Temperieren von Behältern mittels der erfindungsgemäßen Temperiervorrichtung von Vorteil. Beispielsweise können Speisen in einem Behälter je nach Bedarf und Art der Speise erwärmt oder abgekühlt werden. Beispielsweise können auf Vorrat zubereitete Speisen in einem Behälter zunächst gekühlt werden, um die Haltbarkeit zu verlängern, und anschließend bei Bedarf im selben Behälter erwärmt werden.

### Herstellungsverfahren

Die Temperiervorrichtung kann vorteilhafterweise durch wenige Schritte hergestellt werden, beispielsweise durch die folgenden Herstellungsschritte:
a) Bereitstellen einer Umhüllung bzw. einer Manschette;
b) Bereitstellen mindestens eines Heizelements;
c) Bereitstellen mindestens eines Kühlelements;
d) Anordnen bzw. Befestigen des zumindest einen Heizelements und des zumindest einen Kühlelements in bzw. an die Umhüllung oder Manschette.

Vorzugsweise umfaßt das Herstellungsverfahren den zusätzlichen Schritt des Anordnens bzw. Befestigen zumindest einer Fixiervorrichtung an die Umhüllung bzw. die Manschette. Es versteht sich das der oben genannte Schritt a) bereits das Befestigen der Fixiervorrichtung umfassen kann.

### Figurenbeschreibung

Eine bevorzugte Ausführungsform einer Temperiervorrichtung und einer Anordnung wird nachfolgend anhand begleitender Figuren beispielhaft beschrieben. Es zeigt:
- Figur 1: einen erste Schnittansicht durch eine Ausführungsform der Temperiervorrichtung;
- Figur 2: einen weiteren Schnitt durch die in Figur 1 gezeigte Ausführungsform;
- Figur 3: eine Anordnung, welche eine Temperiervorrichtung aufweist; und
- Figur 4: eine weitere Ausführungsform einer Anordnung mit einer Temperiervorrichtung;
- Figur 5: eine Ausführungsform einer Abgastemperiervorrichtung;
- Figur 6: a) eine Draufansicht und b) eine Seitenansicht auf eine weitere Ausführungsform der Temperiervorrichtung.

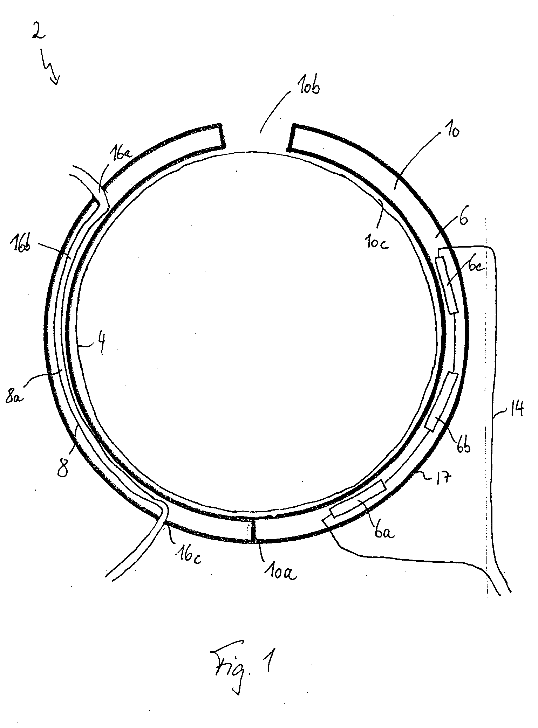

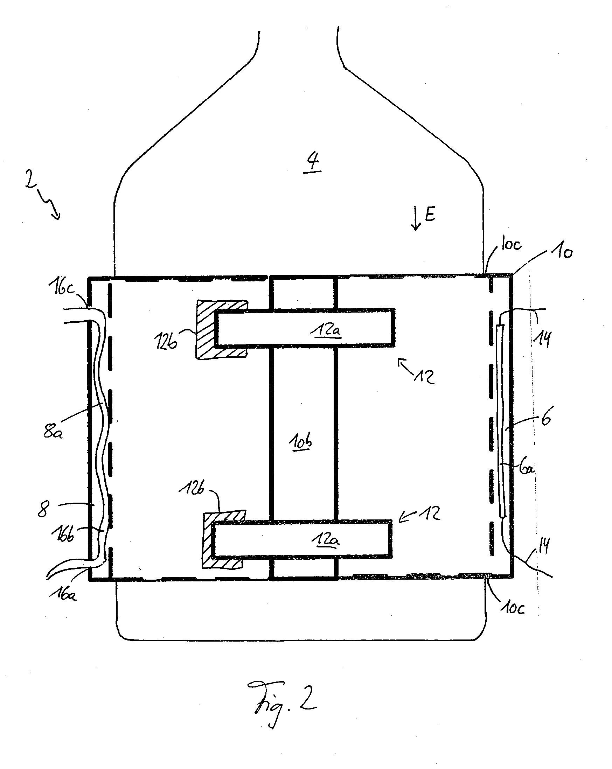

Die **Figur 1** zeigt eine erste Schnittansicht durch eine Temperiervorrichtung 2, welche ausgelegt ist, einen Behälter 4 zu temperieren. Die **Figur 2** zeigt einen weiteren Schnitt durch die Temperiervorrichtung 2, wobei der Schnitt senkrecht zu dem in Figur 1 gezeigten Schnitt orientiert ist. Die Temperiervorrichtung 2 umfaßt einen Heizbereich 6 mit zumindest einem Heizelement 6a und einen Kühlbereich 8 mit zumindest einem Kühlelement 8a. Wie in Figur 1 gezeigt kann auch eine Vielzahl von Heizelementen 6a, 6b, 6c in dem Heizbereich 6 angeordnet sein.

Die Temperiervorrichtung 2 weist in der in Figur 1 gezeigten Ausführungsform auf Manschette 10 auf, welche zumindest bereichsweise flexibel ist, um die Manschette 10 öffnen und schließen zu können. Dazu kann die Manschette 10 einen flexiblen Biegebereich 10a und einen Öffnungsbereich 10b aufweisen, durch welchen in der Offenposition der Temperiervorrichtung 2 der Behälter 4 durchführbar ist, um in einer Behälteraufnahme 10c angeordnet zu werden. Die Temperiervorrichtung 2 kann auch frei von einem seitlichen Öffnungsbereich 10b sein und der Innendurchmesser der Behälteraufnahme 10c kann durch Dehnen der Temperiervorrichtung 2 vergrößert werden, so daß der Behälter 4 im gedehnten Zustand, also in der Offenposition, der Temperiervorrichtung 2 entlang einer Einführrichtung E zumindest bereichsweise in die Behälteraufnahme 10c einführbar ist. Durch ein Schrumpfen der Temperiervorrichtung 2 kann der Innendurchmesser wieder verkleinert werden, um die Temperiervorrichtung 2 in die Anordnungsposition zu überführen, so daß die relative Verlagerung von Behälter 4 und Temperiervorrichtung 2 durch die dazwischen auftretende Reibung gehemmt ist.

Im Bereich der Heizelemente 6a, 6b, 6c und des zumindest einen Kühlelements 8a kann die Manschette 10 bzw. die Temperiervorrichtung 2 im wesentlichen starr ausgebildet sein. Dadurch ist die Manschette 10 ausgelegt, mit einem Behälter 4 eines bestimmten Durchmessers verwendet zu werden. Die Manschette 10 kann auch vollständig flexibel ausgebildet sein. Insbesondere kann die Manschette 10 im Bereich der Heizelemente 6a, 6b, 6c und des zumindest einen Kühlelements 8a im wesentlichen flexibel ausgebildet sein, wodurch die Manschette 10 mit Behältern 4 mit unterschiedlichen Durchmessern verwendbar ist. Insbesondere kann die Temperiervorrichtung 2 bzw. die Manschette 10 den Behälter mit den Bereichen mechanisch und thermisch kontaktieren, welche flexibel ausgebildet sind.

Mittels einer flexiblen Verformung der Manschette 10 ist die Temperiervorrichtung 2 von der Offenposition, in welcher die Temperiervorrichtung 2 an den Behälter anordenbar ist, in eine Anordnungsposition überführbar, in welcher die Temperiervorrichtung 2 im wesentlichen formschlüssig am Behälter 4 anliegt und thermisch mit dem Behälter 4 kontaktiert ist.

Um die Temperiervorrichtung 2 in ihrer Position zu halten, ist eine Fixiereinrichtung 12 vorgesehen, mit welcher die Temperiervorrichtung 2 in der Anordnungsposition fixierbar ist. Die Fixiereinrichtung 12 weist in der gezeigten Ausführungsform einen als Schlaufenteil 12a eines Klettverschlusses ausgebildeten Fixierbereich 12a auf, welcher in mit einem als Hakenteil 12b eines Klettverschlusses ausgebildeten komplementären Fixierbereich 12b in Eingriff bringbar ist, um die Manschette 10 an dem Behälter 4 zu fixieren. Dabei kann die Manschette 10 in der Anordnungsposition in Reibschluß bzw. Formschluß mit dem Behälter 4 gehalten werden, wobei durch die zwischen der Manschette 10 und der Wandung des Behälters 4 auftretende Reibung ein Verlagern der Temperiervorrichtung 2 relativ zum Behälter 4 gehemmt wird.

Wie in Figur 1 gezeigt, sind der Heizbereich 6 und der Kühlbereich 8 voneinander räumlich getrennt. Bevorzugt sind sowohl der Heizbereich 6 als auch der Kühlbereich 8 geometrisch kompakte Bereiche. Mit anderen Worten sind Heizbereich 6 und Kühlbereich 8 nicht miteinander verschlungen und durchdringen sich nicht gegenseitig. Der Begriff "kompakt" kann insbesondere so verstanden werden, daß die kürzeste, innerhalb der Temperiervorrichtung liegende, Verbindungslinie zwischen zwei Punkten des Heizbereichs 6 nicht den Kühlbereich 8 kreuzt und entsprechend die kürzeste, innerhalb der Temperiervorrichtung liegende, Verbindungslinie zwischen zwei Punkten des Kühlbereichs 8 nicht den Heizbereich 6 kreuzt.

Die in den Figur 1 und 2 gezeigten Heizelemente 6a, 6b, 6c können elektrisch heizbar sein. Vorteilhafterweise können die Heizelemente 6a, 6b, 6c als Heizwiderstand ausgebildet sein, wobei ein mittels elektrischer Leitungen 14 zugeführter und durch die Heizelemente 6a, 6b, 6c fließender elektrischer Strom durch die Heizwiderstände 6a, 6b, 6c in thermische Energie umgewandelt wird. Die elektrischen Heizelemente 6a, 6b, 6c können sowohl mit Gleichspannung als auch mit Wechselspannung betrieben werden. Vorzugsweise werden die Heizelemente 6a, 6b, 6c mit einer niedrigen (Gleich-)Spannung von etwa 12 V bis etwa 60 V, bevorzugt etwa 48 V, betrieben, so daß ein Benutzer bei einem technische Defekt nicht mit einer gefährlichen elektrischen Spannung in Berührung kommen kann. Dabei können alle Heizelemente 6a, 6b, 6c zusammen eine Heizleistung von etwa 100 Watt bis etwa 400 Watt erbringen.

Das Kühlbereich 8 angeordnete Kühlelement 8a umfaßt eine Kühlfluidleitung 16b, welche über einen Vorlauf 16a mit einem Kühlfluid beschickt wird, wobei das Kühlfluid durch die Kühlfluidleitung 16b zu einem Rücklauf 16c fließt. Als bevorzugtes Kühlfluid kann Wasser, Öl oder eine sonstige Flüssigkeit dienen. Das dem Vorlauf zugeführte Kühlfluid weist zweckmäßigerweise eine geringere Temperatur auf, als der zu kühlende Behälter 4, wobei dem Behälter 4 entzogene im Kühlbereich thermische Energie entzogen wird, wodurch das Kühlfluid sich in der Kühlfluidleitung 16b erwärmt und sich der Behälter 4 entsprechend abkühlt. Die Temperatur des Kühlfluids am Vorlauf 16a kann beispielsweise etwa 5°C bis etwa 10°C, insbesondere etwa 8°C betragen.

Um den Behälter 4 von der Umgebung thermisch zu isolieren, kann die Temperiervorrichtung 2 eine Isolierschicht 17 aufweisen, welche an der dem Behälter 4 abgewandten Seite der Temperiervorrichtung 2 angeordnet ist. Entsprechend kann die dem Behälter 4 abgewandte Seite der Manschette 10 zumindest bereichsweise als Isolierschicht 17 ausgebildet sein. Die Isolierschicht kann beispielsweise aus einem geschäumten Kunststoff (z.B. Styropor oder Polyurethan), einem mineralischen Dämmstoff (z.B. Glaswolle oder Steinwolle) oder einem sonstigen thermisch isolierenden Stoff bestehen.

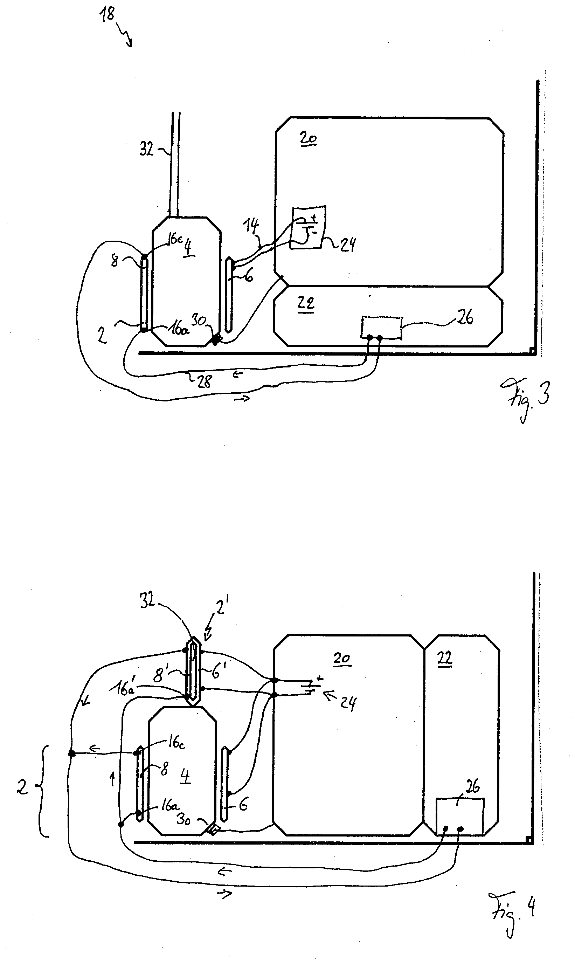

Die **Figur 3** zeigt eine Anordnung 18 mit einer Temperiervorrichtung 2, einer Steuervorrichtung 20 und einer Kühlvorrichtung 22. Die Temperiervorrichtung 2 ist in einer Anordnungsposition an dem Behälter 4 angeordnet und thermisch kontaktiert. Der thermische Kontakt ermöglicht einen Wärmefluß von dem Heizbereich 6 zum Behälter 4 und von dem Behälter 4 zu dem Kühlbereich 8. Die Steuervorrichtung 20 kann als externe Steuervorrichtung 20 ausgebildet sein. Die Steuervorrichtung 20 aktiviert bzw. deaktiviert das zumindest eine Heizelement des Heizbereichs 6, welches über die elektrischen Leitungen 14 mit der Steuervorrichtung 20 elektrisch kontaktiert ist. Die Steuervorrichtung 20 kann eine Stromquelle 24 zum Betrieb des zumindest einen Heizelements aufweisen.

Die Anordnung 18 weist weiter eine Kühlvorrichtung 22 auf, die weiter eine Kühlfluidquelle 26 aufweist, um kaltes Kühlfluid zur Verfügung zustellen, welches über eine Fluidleitung 28 mit dem Vorlauf 16a des zumindest einen Kühlelements des Kühlbereichs 8 fluidisch verbunden ist. Über den Vorlauf 16a wird dem zumindest einen Kühlelement kaltes Kühlfluid zugeführt und erwärmt sich im zumindest einen Kühlelement während des Fließens zum Rücklauf 16c. Das erwärmte Kühlfluid kann zur Kühlvorrichtung 22 als Kühlfluidsenke zurückgeführt werden, wo es abgekühlt wird und wieder der Kühlfluidquelle 26 zugeführt wird.

Die Kühlfluidquelle 26 kann hinsichtlich des Volumenstroms und der Temperatur des Kühlfluids regelbar sein. Insbesondere kann ein Ventil vorgesehen sein, welches den Zufluß von Kühlfluid zum Vorlauf 16a beschränken kann. Das Ventil kann von der Steuervorrichtung 20 in Abhängigkeit von der Temperatur des Behälters 4 gesteuert bzw. geregelt werden. Dazu kann die Steuervorrichtung 20 mit einem Temperatursensor 30 verbunden sein , welcher die Ist-Temperatur des Behälters 4 mißt. Mittels der Steuervorrichtung 20 kann die Temperatur des Behälters 4 auf einen vorbestimmten konstanten Wert gehalten werden, beispielsweise innerhalb eines Intervalls von etwa +/- 0,2 Grad. Fällt die Ist-Temperatur um mehr als etwa 0,2 Grad unter die vorbestimmte Soll-Temperatur, kann die Steuervorrichtung 20 das zumindest eine Heizelement aktivieren, um die Temperatur des Behälters 4 zu erhöhen. Entsprechend kann die Steuervorrichtung 20 das zumindest eine Kühlelement aktivieren, um die Temperatur des Behälters 4 zu senken, wenn die Ist-Temperatur um mehr als etwa 0,2 Grad über der vorbestimmte Soll-Temperatur liegt.

Um den Behälter 4 zu befüllen oder zu entleeren, kann ein Auslaß 32 an dem Behälter ausgebildet oder angeordnet sein. Der Auslaß 32 kann auch als Abluftrohr 32 dienen, um einen Druckausgleich des Inneren des Behälters mit der Umgebung zu ermöglichen. Insbesondere können gasförmige Produkte einer chemischen Reaktion bzw. biologischer Prozesse mittels des Abluftrohrs 32 aus dem Behälter 4 abgeführt werden.

Die **Figur 4** zeigt eine Anordnung 18' mit einer ersten Temperiervorrichtung 2, einer Steuervorrichtung 20 und einer Kühlvorrichtung 22, welche im wesentlichen gleich zu der in Figur 3 gezeigten Anordnung ausgebildet ist, wobei identisch Elemente mit identischen Bezugszeichen versehen sind. Zusätzlich weist die Anordnung 18' eine zweite Temperiervorrichtung 2' auf, welche ein Abluftrohr 32 temperieren kann. Statt des Abluftrohrs 32 kann auf eine beliebige Verbindungsvorrichtung vorgesehen sein, welche den Behälter 4 mit einem weiteren Element oder Baugruppe fluidisch verbindet. Die zweite Temperiervorrichtung 2' kann im wesentlichen Identisch zu der ersten Temperiervorrichtung 2 ausgebildet sein, wobei insbesondere die Größe der zweiten Temperiervorrichtung 2' von der Größe der ersten Temperiervorrichtung 2 abweichen kann, da das Abluftrohr 32 insbesondere einen kleineren Durchmesser als der Behälter 4 aufweisen kann. Dementsprechend können der Heizbereich 6' und der Kühlbereich 8' der zweiten Temperiervorrichtung 2' parallel zu der ersten Temperiervorrichtung 2 an die Steuervorrichtung 20 und die Kühlvorrichtung 22 angeschlossen werden. Es versteht sich, daß die Temperaturregelung für die erste Temperiervorrichtung 2 unabhängig von der zweiten Temperiervorrichtung 2' erfolgen kann. Dazu kann in den Zuleitungen zu den Vorläufen 16a und 16a' jeweils ein steuerbares Ventil (nicht gezeigt) angeordnet sein, um den Volumenstrom von Kühlfluid zur ersten Temperiervorrichtung 2 und zweiten Temperiervorrichtung 2' mittels der Steuerungsvorrichtung 20 zu steuern bzw. zu regeln. Ebenfalls können die elektrischen Heizelemente der ersten und zweiten Temperiervorrichtung 2, 2' getrennt voneinander steuerbar bzw. regelbar sein.

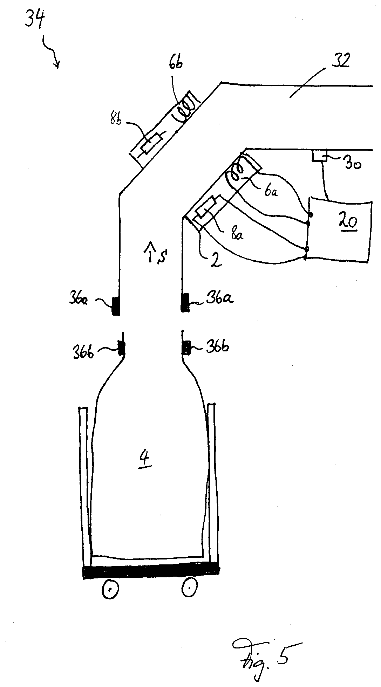

Die **Figur 5** zeigt eine Abgastemperiervorrichtung 34 als bevorzugter Ausführungsform einer Temperiervorrichtung. Die Abgastemperiervorrichtung 34 weist eine Abgasrohrleitung 32 mit einer Anschlußkonfiguration 36a auf, die mit einer komplementären Anschlußkonfiguration 36b eines Behälters 4 lösbar fluidisch verbindbar ist. Am der Abgasrohrleitung 32 ist eine Temperiervorrichtung 2 lösbar oder unlösbar befestigt, wobei die Temperiervorrichtung 2 zumindest ein Kühlelement 8a, 8b und zumindest ein Heizelement 6a, 6b umfaßt. Die Temperiervorrichtung 2 kontaktiert thermisch mit der Abgasrohrleitung 32, wobei ein entlang einer Strömungsrichtung S durch die Abgasrohrleitung 32 strömendes Abgas temperierbar ist. Zweckmäßigerweise ist ein Temperatursensor 30 vorgesehen, der mit einer Steuervorrichtung 20 kontaktiert bzw. verbunden ist, wobei die Steuereinrichtung 20 das zumindest eine Heizelement 6a, 6b und das zumindest eine Kühlelement 8a, 8b der Temperiervorrichtung 2 steuert bzw. regelt. Mit anderen Worten können die Temperiervorrichtung 2 und die Steuervorrichtung 20 analog zu den in den Figuren 3 und 4 gezeigten Anordnungen angeordnet sein.

Der Behälter 4 kann ein Bioreaktorbehälter 4 sein, der temporär mit der Abgastemperiervorrichtung 34 fluidisch verbunden wird und insbesondere nach Durchführung der Bioreaktion entsorgt wird. Abhängig von der im Bioreaktor 4 durchgeführten Bioreaktion, kann die Abluft gekühlt und/oder beheizt werden. Vorteilhafterweise kann das zumindest eine Kühlelement 8a, 8b ein Kondensieren von Stoffen aus dem Abgas bewirken, wobei das Kondensat zurück in den Bioreaktor 4 fließt. Anschließend kann das Abgas mittels des zumindest einen Heizelements 6a, 6b auf Temperaturen oberhalb von etwa 90 Grad Celsius, bevorzugt oberhalb von etwa 100 Grad Celsius erwärmt werden, um das Abgas zu sterilisieren.

Insbesondere erlaubt die Abgastemperiervorrichtung 34 die Funktionsfähigkeit eines Sterilfilters (nicht gezeigt), der nachfolgend im Abgasstrom angeordnet ist, zu erhöhen. Sterilfilter erlauben das Filtern von Mikroorganismen, wie beispielsweise Bakterien und Viren, aus dem Abgas, um eine Kontamination der Umgabung zu vermeiden. Ein im Abgas befindliche Feuchtigkeit führen jedoch zu einem erhöhten Durchströmungswiderstand bzw. einem Verblocken des Sterilfilters. Durch eine Abkühlung des Abgases mittels des zumindest einen Kühlelements der Temperiervorrichtung kann Feuchtigkeit aus dem Abgas kondensiert und insbesondere zum Behälter zurückgeführt werden, um die absolute Abgasfeuchtigkeit zu reduzieren. Bevorzugt kann das Abgas anschließend mittels des zumindest einen Heizelements der Temperiervorrichtung erwärmt werden, wodurch die relative Abgasfeuchtigkeit sinkt. Dadurch kann mittelbar auch der Sterilfilter erwärmt werden, wodurch ein Niederschlagen der Feuchtigkeit im Sterilfilter verhindert wird.

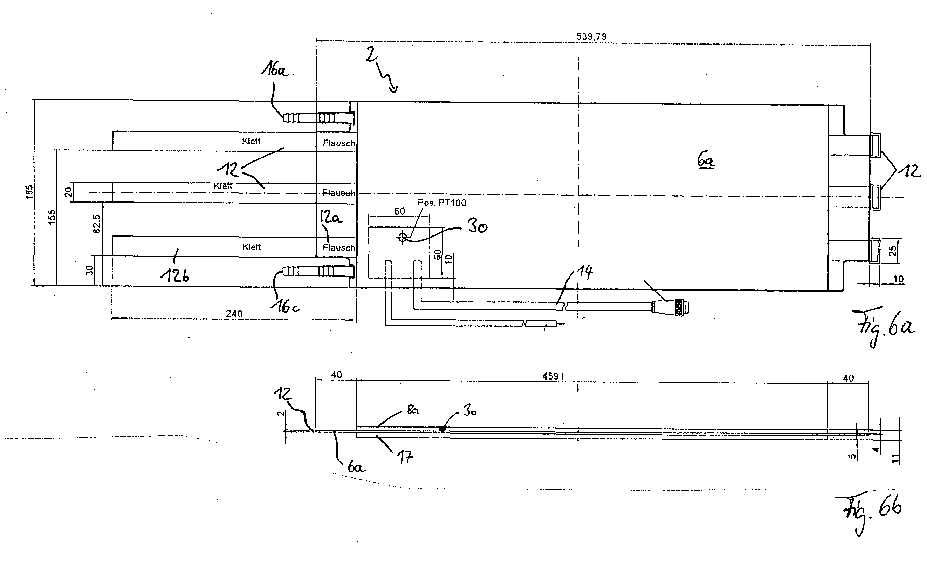

Die **Figur 6a** zeigt eine Draufansicht und die **Figur 6b** eine Seitenansicht auf eine weitere Ausführungsform der Temperiervorrichtung 2, wobei die Ansicht der Figur 6b senkrecht zu der Ansicht in Figur 6a orientiert ist. Die Temperiervorrichtung 2 umfaßt ein Heizelement 6a und ein Kühlelement 8a. Das Heizelement 6a und das Kühlelement 8a sind jeweils flächig ausgebildet. Mit anderen Worten ist die Breiten- und Längserstreckung um einen Faktor von größer als etwa 5, bevorzugt von größer als etwa 10 größer als die Dickenerstreckung. Das Heizelement 6a und das Kühlelement 8a sind im wesentlichen parallel zueinander in der als Manschette ausgebildeten Temperiervorrichtung angeordnet. Dabei ist das Kühlelement 8a dem Behälter (nicht gezeigt) zugewandt bzw. bei betriebsgemäßen Gebrauch der Temperiervorrichtung näher an dem Behälter angeordnet als das Heizelement 6a.

Das Heizelement 6a und das Kühlelement 8a mittels einer Isolierschicht 17, welche an der dem Behälter abgewandten Seite der Temperiervorrichtung 2 angeordnet ist, gegenüber der Umgebung thermisch isoliert.

Um die Temperiervorrichtung 2 an dem Behälter zu befestigen, ist eine Fixiereinrichtung 12 in Form eines Klettverschlusses 12 vorgesehen, welcher einen Schlaufenteil 12a bzw. Flausch 12a und einen Hakenteil 12b aufweist.

Ein mit einer Steuervorrichtung verbindbarer Temperatursensor 30 kann in der Temperiervorrichtung angeordnet sein, beispielsweise in einer Schicht, in welcher das Kühlelement 8a oder das Heizelement 6a angeordnet ist. Bevorzugt ist der Temperatursensor derart angeordnet, daß er der Behälter thermisch und/oder mechanisch kontaktieren kann, um dessen Ist-Temperatur zu messen.

Die einzelnen Elemente und deren Funktion entsprechen die zur Figur 1 beschriebenen Elemente und Funktionen, weshalb identische Elemente mit identischen Bezugszeichen versehen sind.

### Bezugszeichenliste

- 2: Temperiervorrichtung
- 4: Behälter
- 6: Heizbereich
- 6a-c: Heizelement
- 8: Kühlbereich
- 8a: Kühlelement
- 10: Manschette
- 10a: Biegebereich
- 10b: Öffnungsbereich
- 10c: Behälteraufnahme
- 12: Fixiereinrichtung
- 12a: Fixierbereich
- 12b: komplementärer Fixierbereich
- 14: elektrische Leitung
- 16a: Vorlauf
- 16b: Kühlfluidleitung
- 16c: Rücklauf
- 17: Isolierschicht
- 18: Anordnung
- 20: Steuervorrichtung
- 22: Kühlvorrichtung
- 24: Stromquelle
- 26: Kühlfluidquelle
- 28: Fluidleitung
- 30: Temperatursensor
- 32: Abluftrohr bzw. Auslaß
- 34: Abgastemperiervorrichtung
- 36a: Anschlußkonfiguration
- 36b: komplementäre Anschlußkonfiguration
- E: Einführrichtung
- S: Strömungsrichtung

## Patentansprüche

1. Temperiervorrichtung (2) zum Temperieren eines Behälters (4) umfassend:
- zumindest ein Heizelement (6a), und
- zumindest ein Kühlelement (8a),
wobei das zumindest eine Heizelement (6a) zumindest einen Heizbereich (6) ausbildet und das zumindest eine Kühlelement (8a) zumindest einen Kühlbereich (8) ausbildet,
wobei der zumindest eine Heizbereich (6) und der zumindest eine Kühlbereich (8) als voneinander räumlich getrennte geschlossene Bereiche ausgebildet sind,
wobei die Temperiervorrichtung (2) zumindest bereichsweise flexibel ausgebildet ist,
wobei die Temperiervorrichtung (2) durch eine flexible Verformung von einer Offenposition in eine Anordnungsposition überführbar ist und
wobei die Temperiervorrichtung (2) in der Anordnungsposition zumindest bereichsweise formschlüssig an einer Wandung des Behälters (4) anordenbar und derart thermisch kontaktierbar ist, daß der Behälter (4) mittels des zumindest einen Heizelements (6a) und des zumindest einen Kühlelements (8a) temperierbar ist,
wobei die Temperiervorrichtung (2) weiter eine Fixiereinrichtung (12), mit welcher die Temperiervorrichtung (2) in der Anordnungsposition fixierbar ist, umfasst.

2. Temperiervorrichtung (2) gemäß Anspruch 1, wobei das zumindest eine Heizelement (6a) und das zumindest eine Kühlelement (8a) flächig ausgebildet und im wesentlichen parallel zueinander angeordnet sind.

3. Temperiervorrichtung (2) gemäß Anspruch 1, wobei die Fixiereinrichtung (12) als Klettverschluß ausgebildet ist.

4. Temperiervorrichtung (2) gemäß einem der Ansprüche 1 oder 3, wobei das zumindest eine Heizelement (6a) elektrisch heizbar ist.

5. Temperiervorrichtung (2) gemäß einem der Ansprüche 1 oder 3 bis 4, wobei das zumindest eine Kühlelement (8a) mittels eines Kühlfluids oder elektrisch kühlbar ist.

6. Temperiervorrichtung (2) gemäß einem der Ansprüche 1 oder 3 bis 5, wobei die Temperiervorrichtung (2) zumindest eine Isolierschicht aufweist, welche an der dem Behälter (4) abgewandten Seite der Temperiervorrichtung (2) angeordnet ist.

7. Anordnung (18) umfassend:
- eine Temperiervorrichtung (2) gemäß einem der vorigen Ansprüche,
- einen Behälter (4), mit welchem die Temperiervorrichtung (2) in thermischen Kontakt angeordnet ist, und
- eine Steuervorrichtung (20), welche das zumindest eine Heizelement (6a, 6b, 6c) und das zumindest eine Kühlelement (8a) der Temperiervorrichtung (2) steuert.

8. Anordnung (18) gemäß Anspruch 7, weiter umfassend:
- einen Temperatursensor (2), durch welchen die Temperatur des Behälters (4) erfaßbar ist und welcher mit der Steuervorrichtung (20) verbunden ist.

9. Anordnung (18) gemäß Anspruch 7 oder 8, weiter umfassend:
- eine Kühlfluidquelle (26), welche mit dem Vorlauf (16a) des zumindest einen Kühlelements (8a) fluidisch verbunden ist.

10. Anordnung (18) gemäß einem der Ansprüche 7 bis 9, wobei der Behälter als Rohrleitung (32) ausgebildet ist.

11. Anordnung (18) gemäß Anspruch 10, wobei die Rohrleitung (32) eine Anschlußkonfiguration (36a) aufweist, welche mit einer komplementären Anschlußkonfiguration (36b) eines weiteren Behälters (4) lösbar fluidisch verbindbar ist.

12. Verwendung einer Temperiervorrichtung (2) gemäß einem der Ansprüche 1 bis 6 zum Temperieren eines Behälters (4), wobei die Temperiervorrichtung (2) in einer Offenposition an den Behälter (4) angeordnet wird und in die Anordnungsposition überführt wird, wobei das zumindest eine Heizelement (6a) und das zumindest eine Kühlelement (8a) der Temperiervorrichtung (2) mit dem Behälter (4) thermisch kontaktiert und wobei das zumindest eine Heizelement (6a) aktiviert wird, um den Behälter (4) zu erwärmen, oder das zumindest eine Kühlelement (8a) aktiviert wird, um dem Behälter (4) abzukühlen.

13. Verwendung gemäß Anspruch 12, wobei der Behälter (4) auf eine vorbestimmte konstante Temperatur gehalten wird.

## Claims

1. A temperature control device (2) for controlling the temperature of a container (4) comprising:
- at least one heating element (6a), and
- at least one cooling element (8a),
wherein the at least one heating element (6a) embodies at least one heating region (6) and the at least one cooling element (8a) embodies at least one cooling region (8),
wherein the at least one heating region (6) and the at least one cooling region (8) are embodied as closed regions spatially separated from each other,
wherein the temperature control device (2) is configured to be flexible at least in regions,
wherein the temperature control device (2) can be transferred from an open position to an arrangement position by means of a flexible deformation and
wherein in the arrangement position the temperature control device (2) can be arranged at least in regions on a wall of the container (4) in a form-fitting manner and can be thermally contacted such that the container (4) can be temperature controlled by means of the at least one heating element (6a) and the at least one cooling element (8a),
wherein the temperature control device (2) further comprises a fixing device (12), with which the temperature control device (2) can be fixed in the arrangement position.

2. The temperature control device (2) according to claim 1, wherein the at least one heating element (6a) and the at least one cooling element (8a) are embodied in planar manner and are arranged substantially parallel to each other.

3. The temperature control (2) device according to claim 1, wherein the fixing device (12) is embodied as a Velcro® fastener.

4. The temperature control device (2) according to any of claims 1 or 3, wherein the at least one heating element (6a) is electrically heatable.

5. The temperature control device (2) according to any of claims 1 or 3 to 4, wherein the at least one cooling element (8a) can be cooled by means of a cooling fluid or can be cooled electrically.

6. The temperature control device (2) according to any of claims 1 or 3 to 5, wherein the temperature control device (2) has at least one insulation layer, which is arranged on the side of the temperature control device (2) averted from the container (4).

7. An arrangement (18) comprising:
- a temperature control device (2) according to any of the preceding claims,
- a container (4), with which the temperature control device (2) is arranged in thermal contact, and
- a control device (20), which controls the at least one heating element (6a, 6b, 6c) and the at least one cooling element (8a) of the temperature control device (2).

8. The arrangement (18) according to claim 7, further comprising:
- a temperature sensor (2), by means of which the temperature of the container (4) can be detected and which is connected to the control device (20).

9. The arrangement (18) according to claim 7 or 8, further comprising:
- a cooling fluid source (26), which is fluidically connected to the flow pipe (16a) of the at least one cooling element (8a).

10. The arrangement (18) according to any of claims 7 to 9, wherein the container is embodied as a pipe (32).

11. The arrangement (18) according to Claim 10, wherein the pipe (32) has a connection configuration (36a) which can be fluidically connected in a detachable manner to a complementary connection configuration (36b) of a further container (4).

12. The use of a temperature control device (2) according to any of claims 1 to 6 for controlling the temperature of a container (4), wherein the temperature control device (2) is arranged in an open position on the container (4) and is transferred to the arrangement position, wherein the at least one heating element (6a) and the at least one cooling element (8a) of the temperature control device (2) are thermally contacted to the container (4) and wherein the at least one heating element (6a) is activated in order to heat the container (4), or the at least one cooling element (8a) is activated in order to cool the container (4).

13. The use according to claim 12, wherein the container (4) is kept at a predetermined constant temperature.

## Revendications

1. Dispositif d'équilibrage de température (2) servant à équilibrer la température d'un récipient (4) comprenant :
- au moins un élément chauffant (6a), et
- au moins un élément de refroidissement (8a),
dans lequel le au moins un élément chauffant (6a) réalise au moins une zone de chauffage (6) et le au moins un élément de refroidissement (8a) réalise au moins une zone de refroidissement (8),
dans lequel la au moins une zone de chauffage (6) et la au moins une zone de refroidissement (8) sont réalisées sous la forme de zones fermées séparées dans l'espace l'une de l'autre,
dans lequel le dispositif d'équilibrage de température (2) est réalisé au moins par endroits de manière flexible, dans lequel le dispositif d'équilibrage de température (2) peut être amené par une déformation flexible d'une position ouverte dans une position de mise en place et
dans lequel le dispositif d'équilibrage de température (2), dans la position de mise en place, peut être disposé au moins par endroits par complémentarité de formes sur une paroi du récipient (4) et peut être mis en contact thermique de telle sorte que le récipient (4) peut être équilibré en température au moyen du au moins un élément chauffant (6a) et du au moins un élément de refroidissement (8a),
dans lequel le dispositif d'équilibrage de température (2) comprend en outre un système de fixation (12), avec lequel le dispositif d'équilibrage de température (2) peut être fixé dans la position de mise en place.

2. Dispositif d'équilibrage de température (2) selon la revendication 1, dans lequel le au moins un élément chauffant (6a) et le au moins un élément de refroidissement (8a) sont réalisés de manière plane et disposés sensiblement parallèlement l'un à l'autre.

3. Dispositif d'équilibrage de température (2) selon la revendication 1, dans lequel le système de fixation (12) est réalisé sous la forme d'une fermeture auto-agrippante.

4. Dispositif d'équilibrage de température (2) selon l'une quelconque des revendications 1 ou 3, dans lequel le au moins un élément chauffant (6a) peut être chauffé électriquement.

5. Dispositif d'équilibrage de température (2) selon l'une quelconque des revendications 1 ou 3 à 4, dans lequel le au moins un élément de refroidissement (8a) peut être refroidi au moyen d'un fluide de refroidissement ou électriquement.

6. Dispositif d'équilibrage de température (2) selon l'une quelconque des revendications 1 ou 3 à 5, dans lequel le dispositif d'équilibrage de température (2) présente au moins une couche isolante, laquelle est disposée sur la face, opposée au récipient (4), du dispositif d'équilibrage de température (2).

7. Ensemble (18) comprenant :
- un dispositif d'équilibrage de température (2) selon l'une quelconque des revendications précédentes,
- un récipient (4), avec lequel le dispositif d'équilibrage de température (2) est disposé en contact thermique, et
- un dispositif de commande (20), lequel commande le au moins un élément chauffant (6a, 6b, 6c) et le au moins un élément de refroidissement (8a) du dispositif d'équilibrage de température (2).

8. Ensemble (18) selon la revendication 7, comprenant en outre :
- un capteur de température (2), par lequel la température du récipient (4) peut être détectée et lequel est relié au dispositif de commande (20).

9. Ensemble (18) selon la revendication 7 ou 8, comprenant en outre :
- une source de fluide de refroidissement (26), laquelle est reliée fluidiquement à la canalisation montante (16a) du au moins un élément de refroidissement (8a).

10. Ensemble (18) selon l'une quelconque des revendications 7 à 9, dans lequel le récipient est réalisé sous la forme d'une conduite tubulaire (32).

11. Ensemble (18) selon la revendication 10, dans lequel la conduite tubulaire (32) présente une configuration de raccordement (36a), laquelle peut être reliée fluidiquement de manière libérable à une configuration de raccordement (36b) complémentaire d'un autre récipient (4).

12. Utilisation d'un dispositif d'équilibrage de température (2) selon l'une quelconque des revendications 1 à 6 pour équilibrer en température un récipient (4), dans lequel le dispositif d'équilibrage de température (2), dans une position ouverte, est disposé sur le récipient (4) et est amené dans la position de mise en place, dans laquelle le au moins un élément chauffant (6a) et le au moins un élément de refroidissement (8a) du dispositif d'équilibrage de température (2) sont mis en contact thermique avec le récipient (4) et dans laquelle le au moins un élément chauffant (6a) est activé, afin de chauffer le récipient (4), ou le au moins un élément de refroidissement (8a) est activé, afin de refroidir le récipient (4).

13. Utilisation selon la revendication 12, dans laquelle le récipient (4) est maintenu à une température constante prédéfinie.
